# EUROPEAN PATENT APPLICATION

(11) **EP 4 495 948 A1**
(43) Date of publication of application: **22.01.2025**
(21) Application number: 23275106.5
(22) Date of filing: 17.07.2023
(51) Int. Cl.: G21C 1/20, G21C 3/16, G21C 3/38

(54) **FUEL ASSEMBLY**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A fuel assembly (100) for a nuclear fission reactor system (110). The fuel assembly (100) may comprise a pressure tube (120) comprising an aluminium or aluminium alloy. The fuel assembly (100) may comprise a sleeve member (132), the sleeve member (132) extending along a radially inner surface (134) of the pressure tube (120). The fuel assembly (100) may comprise a fuel compact unit (136). The fuel compact unit (136) may be located within the sleeve member (132)) such that a clearance is maintained between a radially inner surface (139) of the sleeve member (132) and the fuel compact unit (136) to define a sleeve member flow passage (140).

## Description

### FIELD

The present disclosure relates to a fuel assembly.

In particular the present disclosure relates to a fuel assembly for a nuclear fission reactor system.

### BACKGROUND

Nuclear fission reactor systems are used to provide power in many different applications, operating as a heat engine system. By way of example, the nuclear reactor is provided as a heat source to heat a working fluid which is passed through a closed cycle comprising a compressor and turbine to rotate a shaft from which other machines can be driven (for example an electrical generator). The heat engine system comprises many components and interlinked sub-systems.

A heat engine system and/or the components and/or sub-systems of the heat engine system which, in use, result in increased safety and efficiency of the heat engine system, are highly desirable.

### SUMMARY

According to the present disclosure there is provided an apparatus, systems and method as set forth in the appended claims. Other features of the invention will be apparent from the dependent claims, and the description which follows.

Accordingly there may be provided a fuel assembly (100) for a nuclear fission reactor system (110). The fuel assembly (100) may extend along a longitudinal axis (112). The fuel assembly (100) may comprise a pressure tube (120) comprising an aluminium or aluminium alloy. The fuel assembly (100) may comprise a sleeve member (132). The sleeve member (132) may be provided radially inward of a radially inner surface (134) of the pressure tube (120). The fuel assembly (100) may comprise a fuel compact unit (136). The fuel compact unit (136) may be located within the sleeve member (132) such that a clearance gap (137) is maintained between a radially inner surface (139) of the sleeve member (132) and the fuel compact unit (136) to define a sleeve member flow passage (140).

The sleeve member (132) and/or fuel compact unit (136) may comprise silicon carbide.

The sleeve member (132) and/or fuel compact unit (136) may comprise a coating and/or layer of Environment Barrier Coating.

A first spacer element (150) may extend between the fuel compact unit (136) and the sleeve member (132) to locate the fuel compact unit (136) within the sleeve member (132) and maintain the clearance gap (137) therebetween.

An end plug (152) may be provided at an end of the fuel compact unit (136) and the sleeve member (132), and a second spacer element (158) may extend from the end plug (152) to the pressure tube (120) to locate the sleeve member (132) within the pressure tube (120) and to maintain an insulation gap (138) between the pressure tube (120) and the sleeve member (132).

The fuel compact unit (136) may define a first flow passage (160) running from a flow inlet (162) provided at a first end (164) of the fuel assembly (100) to a flow outlet (166) provided at a second end (168) of the fuel assembly (100).

The fuel assembly (100) may be centred on the longitudinal axis (112).

The first flow passage (160) may be centred on the longitudinal axis (112).

The fuel compact unit (136) may define a second flow passage (170) running from the flow inlet (162) to the flow outlet (166) of the fuel compact unit (136), the second flow passage (170) being provided radially outwards of the first flow passage (160).

The fuel compact unit (136) may define a plurality of second flow passages (170) running from the flow inlet (162) to the flow outlet (166) of the fuel compact unit (136), each of the plurality of second flow passages (170) being provided radially outwards of the first flow passage (160), fin elements (172) being provided between each of the second flow passages (170).

The fuel compact unit (136) may be integrally formed.

There may be provided a nuclear fission reactor system (110) comprising a nuclear reactor unit (200) comprising a fuel assembly (100) according to the present disclosure wherein the fuel assembly flow inlet (162) is operable (i.e. configured) to be in fluid communication with a working fluid source (806). The fuel assembly flow outlet (166) may be operable (i.e. configured) to be in fluid communication with a working fluid exhaust (840).

There may be provided a heat engine system (300). The heat engine system (300) may comprise a compressor (400) defining a compressor fluid flow path (402) extending from a compressor inlet (404) to a compressor outlet (406).

The heat engine system (300) may comprise a heat source (500) provided as the nuclear fission reactor system (110) according to the present disclosure.

The heat engine system (300) may comprise a turbine system (600) defining a turbine fluid flow path (602) extending from a turbine inlet (604) to a turbine outlet (606). The compressor (400), heat source (500) and turbine system (600) may define part of a working fluid flow circuit (700). The working fluid flow circuit (700) may further comprise a compressor-to-heat-source duct (702) which extends between the compressor outlet (406) and the heat source inlet (502), a heat-source-to-turbine duct (704) which extends between the heat source outlet (504) and the turbine inlet (604); and a turbine-to-compressor duct (706) which extends between the turbine outlet (606) and the compressor inlet (404).

The heat engine system (300) may further comprise a wet compression fluid source (850) in fluid communication with the compressor fluid flow path (402).

The heat engine system (300) may further comprise a recuperator (810).

The heat engine system (300) may further comprise a heat exchanger (812).

The compressor-to-heat-source duct (702) may provide fluid communication between the compressor outlet (406) and the heat source inlet (502) via the recuperator (810).

The turbine-to-compressor duct (706) may provide fluid communication between the turbine outlet (606) and the compressor inlet (404) via the recuperator (810) and the heat exchanger (812).

There may be provided a method of operation of a heat engine system (300) as according to the present disclosure wherein the working fluid (800) comprises nitrogen and water vapour. The working fluid (800) may be delivered to the compressor inlet (404) at a predetermined range of pressure and temperature values.

The pressure values may be in the range of 0 to 10 bar absolute. The temperature values may be in the range of 0 deg C to 60 deg C.

There may be provided a cooling system (900) for a heat source (500) forming part of a nuclear fission reactor system (110). The cooling system (900) may comprise a first coolant reservoir (902) for containment of a first coolant (908). The cooling system (900) may comprise a condenser (904). The cooling system (900) may comprise a first coolant system (906).

The cooling system (900) may further comprise a first coolant system (906). The first coolant system (906) may be configured to deliver the first coolant (908) evaporated from the first coolant reservoir (902) by the heat source (500) to the condenser (904). The first coolant system (906) may be configured to deliver condensate (910) back to the first coolant reservoir (902).

The first coolant system (906) may comprise the first coolant reservoir (902) and /or the condenser (904).

The cooling system (900) may further comprise a second coolant flow intake duct (922) which extends from a second-coolant-flow-intake-duct-inlet (924) to a second-coolant-flow-intake-duct-outlet (926).

The cooling system (900) may further a second coolant flow exhaust duct (932) which extends from a second-coolant-flow-exhaust-duct-inlet (934) to a second-coolant-flow-exhaust-duct-outlet (936).

The first coolant reservoir (902) may comprise a first-coolant-reservoir-second-coolant-inlet (928) and a first-coolant-reservoir-second-coolant-outlet (930).

The second-coolant-flow-intake-duct-outlet (926) may be in fluid communication with the first-coolant-reservoir-second-coolant-inlet (928).

The first-coolant-reservoir-second-coolant-outlet (930) may be in fluid communication with the second-coolant-flow-exhaust-duct-inlet (934).

The second coolant flow intake duct (922), the first coolant reservoir (902) and the second coolant flow exhaust duct (932) may be provided in series to define a second coolant flow path (920).

The second coolant flow path (920) may be closed by the first coolant (908) in the first coolant reservoir (902) when the first coolant (908) is above a predetermined level (L1) in the first coolant reservoir (902).

The second coolant flow path (920) may be open to enable the second coolant flow from the second-coolant-flow-intake-duct-inlet (924) to the second-coolant-flow-exhaust-duct-outlet (936) when the first coolant (908) is below a predetermined level (L1) in the first coolant reservoir (902).

The first coolant (908) may be water.

The second coolant may be air.

The first coolant reservoir (902) may be in fluid communication with a first coolant fluid source (1000).

There may be provided a power plant (1100) comprising a heat source (500) forming part of a nuclear fission reactor system (110) and a cooling system (900) according to the present disclosure.

The heat source (500) may define at least part of the section of the second coolant flow path (920) which extends between the first-coolant-reservoir-second-coolant-inlet (928) and the first-coolant-reservoir-second-coolant-outlet (930).

The nuclear fission reactor system (110) may comprise a nuclear reactor unit (200) provided with a fuel assembly (100) comprising a pressure tube (120) configured for receiving a flow of working fluid (800). The fuel assembly (100) may define the heat source (500). The pressure tube (120) may extend through the first coolant reservoir (902) to define at least part of the second coolant flow path (920).

The power plant (1100) may be configured such that the working fluid (800) is fluidly isolated from the first coolant (908) and the second coolant (940).

The pressure tube (120) may define at least part of the section of the second coolant flow path (920) which extends between the first-coolant-reservoir-second-coolant-inlet (928) and the first-coolant-reservoir-second-coolant-outlet (930).

The nuclear reactor unit (200) may comprise a plurality of fuel assemblies (100) which each comprise a pressure tube (120) for receiving a flow of working fluid (800). The plurality of fuel assemblies (100) may define the heat source (500). The plurality of pressure tubes (120) may extend through the coolant reservoir (902) of the cooling system (900).

The plurality of pressure tubes (120) may define at least part of the section of the second coolant flow path (920) which extends between the first-coolant-reservoir-second-coolant-inlet (928) and the first-coolant-reservoir-second-coolant-outlet (930).

A clearance may be maintained between adjacent pressure tubes (120), wherein the clearance(s) defines at least part of the section of the second coolant flow path (920) which extends between the first-coolant-reservoir-second-coolant-inlet (928) and the first-coolant-reservoir-second-coolant-outlet (930).

The pressure tubes (120) may be spaced apart from one another to define the clearance therebetween.

There may be provided a method of operation of a cooling system (900) for a heat source (500) forming part of a nuclear fission reactor system (110).

The cooling system (900) may define (i.e. comprise) a second coolant flow path (920) comprising, in series, a second coolant flow intake duct (922), a first coolant reservoir (902) and a second coolant flow exhaust duct (932).

In operation when the first coolant (908) is above a predetermined level (L1) in the first coolant reservoir (902) the second coolant flow path (920) may be closed by the first coolant (908) in the first coolant reservoir (902).

In operation, when the first coolant (908) is below a predetermined level (L1) in the first coolant reservoir (902), the second coolant flow path (920) may be open to enable the second coolant flow from the second coolant flow intake duct (922) to the second coolant flow exhaust duct (932).

Hence there is a provided a heat engine system, and the components and sub-systems of a heat engine system, which, in use, result in increased safety and efficiency compared to examples of the related art.

### BRIEF DESCRIPTION OF THE FIGURES

Embodiments of the invention will now be described by way of example only with reference to the figures, in which:
Figure 1 shows a diagrammatic representation of a heat engine system (e.g. a power plant) according to the present disclosure;
Figure 2 shows a side cross-sectional view of a fuel assembly according to the present disclosure;
Figure 3 shows an enlarged region of the cross-sectional view of the fuel assembly shown in figure 2;
Figure 4 shows an end cross-sectional view of the fuel assembly shown in figures 2, 3;
Figure 5 shows a perspective part sectional view of part of the fuel assembly shown in figures 2 to 4;
Figure 6 shows an enlarged region of part of the fuel assembly shown in figures 2 to 4;
Figure 7 shows a diagrammatic representation of part of a power plant comprising a cooling system according to the present disclosure;
Figure 8 shows an enlarged sectional view of part of the power plant shown in figure 7;
Figure 9 shows an enlarged view of part of the power plant shown in figures 7, 8;
Figure 10 shows an enlarged sectional view of part of the power plant shown in figures 7, 8, 9; and
Figure 11 shows an enlarged sectional view of the part of the power plant shown in figure 8.

### DETAILED DESCRIPTION

The present disclosure relates to a fuel assembly 100 for a nuclear fission reactor system 110. The present disclosure also relates to a nuclear fission reactor system 110 comprising a nuclear reactor unit 200 comprising a fuel assembly 100. The present disclosure also relates to a heat engine system 300 and a method of operation of a heat engine system 300. The present disclosure further relates to a cooling system 900 for a heat source 500 forming part of a nuclear fission reactor system 110 and a method of operation of a cooling system 900 for a heat source 500 forming part of a nuclear fission reactor system 110. The present disclosure also relates to a power plant 1100 comprising a heat source 500 forming part of a nuclear fission reactor system 110. Hence the power plant 1100 may comprise a heat source 500 and the heat source 500 may form part of a nuclear fission reactor system 110.

The present disclosure may also relate a facility or vehicle comprising any aspect of the present disclosure. The vehicle 10 may be a land based vehicle or a watercraft such as a surface vessel or a submersible such as a submarine.

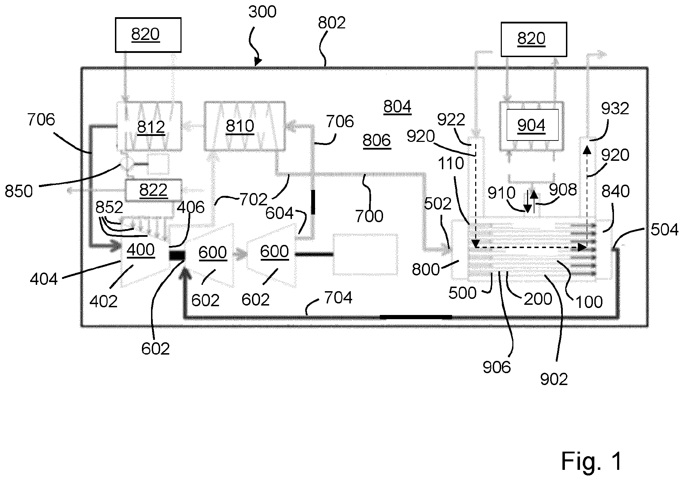

Figure 1 illustrates heat engine system 300. The heat engine system 300 may comprise a heat source 500 provided as a nuclear fission reactor system 110. The heat source 500 is provided with a heat source inlet 502 and a heat source outlet 504. In operation, a working fluid 800 passes into the heat source 500 through the heat source inlet 502 and, having been heated, is then exhausted via the heat source outlet 504. The working fluid 800 may comprise nitrogen.

The nuclear fission reactor system 110 may comprise a nuclear reactor unit 200 comprising a fuel assembly 100 according to the present disclosure. The fuel assembly 100 may define at least part of the heat source 500.

The heat engine system 300 may comprise a compressor 400 defining a compressor fluid flow path 402 extending from a compressor inlet 404 to a compressor outlet 406.

The heat engine system 300 may comprise a turbine system 600 defining a turbine fluid flow path 602 extending from a turbine inlet 604 to a turbine outlet 606.

Both the compressor fluid flow path 402 and the turbine fluid flow path 602 are configured for the flow of the working fluid 800 therethrough.

As illustrated in figure 1, the compressor 400, heat source 500 and turbine system 600 define part of a working fluid flow circuit 700 along which the working fluid 800 flows. The working fluid flow circuit 700 further comprises a compressor-to-heat-source duct 702 which extends between the compressor outlet 406 and a heat source inlet 502. The working fluid flow circuit 700 further comprises a heat-source-to-turbine duct 704 which extends between a heat source outlet 504 and the turbine inlet 604. The working fluid flow circuit 700 further comprises a turbine-to-compressor duct 706 which extends between the turbine outlet 606 and the compressor inlet 404.

The heat engine system 300 further comprises a wet compression fluid source 850 in fluid communication the compressor fluid flow path 402. The wet compression fluid source 850 may be in fluid communication with the compressor fluid flow path 402 via spray units 852 at the compressor inlet 404 and/or between compressor inlet 404 and compressor outlet 406 into the compressor fluid flow path 402. The spray units 852 may be configured to generate droplets having a diameter of 10 microns or less.

The addition of wet compression fluid (e.g. water) to the working fluid 800 may be controlled such that the working fluid 800 is in a 100% relative humidity state as it passes through the compressor 400 (i.e. during compression). As is known in the art, the act of compressing water droplets along with the working fluid 800 will result in the droplet evaporating, maintaining the 100% relative humidity state.

Put another way, in operation, the fluid passing along at least part of the working fluid flow circuit 700 may comprise nitrogen and water vapour such that the working fluid 800 is humidified. That is to say, the relative humidity of the working fluid 800 may be 100%.

The heat engine system 300 may further comprise a housing 802 which is operable to be sealed to define a system reservoir 804 in which the compressor 400, heat source 500, turbine system 600 and working fluid flow circuit 700 are located. The system reservoir 804 may also be provided as the working fluid source 804.

The heat engine system 300 may further comprise a recuperator 810. The heat engine system 300 may further comprise a heat exchanger 812. The compressor-to-heat-source duct 702 may provide fluid communication between the compressor outlet 406 and the heat source inlet 502 via the recuperator 810. The turbine-to-compressor duct 706 may provide fluid communication between the turbine outlet 606 and the compressor inlet 404 via the recuperator 810 and the heat exchanger 812.

The recuperator 810 is configured to recover lost heat from the working fluid 800, for example by adding heat from working fluid 800 passing through/along the turbine-to-compressor duct 706 (from the turbine 600) to working fluid 800 passing through/along the compressor-to-heat-source duct 702 (from the compressor 400, being delivered to the heat source 500).

The heat exchanger 812 may be in heat flow communication with a heat sink 820 to thereby remove heat energy from working fluid 800 flowing along the turbine-to-compressor duct 706 after it has been exhausted from the recuperator 810.

The heat exchanger 812 may be configured to generate a condensate 910 fluid which is delivered to the fluid source 850. That is to say, the heat exchanger 812 may be configured to operate as a condenser to generate a condensate 910 fluid which is delivered to the fluid source 850. The fluid source 850 may be in fluid communication with the compressor fluid flow path 402 via a water heater 822. The water heater 822 may be in heat flow communication with the recuperator 810 to receive heat energy therefrom.

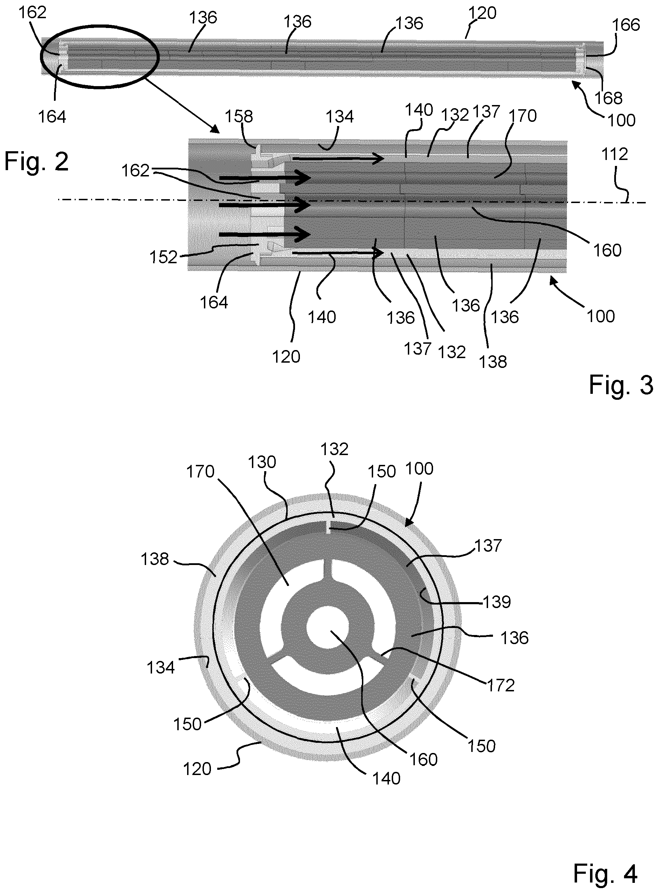

Aspects of the fuel assembly 100 of the reactor unit 200 are illustrated in figures 2 to 6. The fuel assembly 100 is located in the nuclear reactor unit 200 and forms part of the heat source 500. During operation, the working fluid 800 passes through the fuel assembly 100. That is to say, the fuel assembly 100 defines at least part of the working fluid flow path between the heat source inlet 502 and the heat source outlet 504.

The fuel assembly 100 may extend along a longitudinal axis 112. The fuel assembly 100 may be centred on the longitudinal axis 112. The fuel assembly 100 may comprise a pressure tube 120 which may be centred on, and extends along, the longitudinal axis 112.

The pressure tube 120 may comprise an aluminium or aluminium alloy. That is to say the pressure tube 120 may be made from aluminium or aluminium alloy. The pressure tube 120 may be predominately manufactured from aluminium or aluminium alloy. The pressure tube 120 may be configured for reflecting thermal radiation generated by the fuel compact 136 back towards the fuel compact 136. That is to say, the pressure tube 120 may be configured as a thermal radiation shield. A pressure tube 120 made from aluminium may reflect 95% of thermal radiation back towards the fuel compact 136.

A sleeve member 132 may be provided radially inward of a radially inner surface 134 of the pressure tube 120. The sleeve member 132 may be spaced apart from the radially inner surface 134 of the pressure tube 120 to form an insulation gap 138 between the sleeve member 132 and the radially inner surface 134 of the pressure tube 120. That is to say, the sleeve member 132 is provided to form the insulation gap 138 between the sleeve member 132 and the pressure tube 120.which (in use) contains a stagnant (i.e. non flowing) insulating gas.

The sleeve member 132 may be centred on, and extend along, the longitudinal axis 112.

The fuel assembly 100 may comprise a fuel compact unit 136. The fuel compact unit 136 may be centred on, and extend along, the longitudinal axis 112.

The pressure tube 120, sleeve member 132 and fuel compact unit 136 may be arranged concentrically about the longitudinal axis 112. The pressure tube 120, sleeve member 132and fuel compact unit 136 may be nested, with the fuel compact unit 136 spaced apart from the pressure tube 120 by the sleeve member 132.

The fuel compact unit 136 may be located within the sleeve member 132 such that a clearance gap 137 is maintained between a radially inner surface 139 of the sleeve member 132 and the fuel compact unit 136 to define a radiation shield flow passage 140 operable to receive working fluid 800. That is to say, during operation, working fluid 800 passes along the radiation shield flow passage 140.

The sleeve member 132 and/or fuel compact unit 136 may comprise silicon carbide. That is to say, the sleeve member 132 and/or fuel compact unit 136 may comprise silicon carbide. That is to say the sleeve member 132 and/or fuel compact unit 136 may be made from silicon carbide. The sleeve member 132 and/or fuel compact unit 136 may be predominately manufactured from silicon carbide.

The sleeve member 132 and/or fuel compact unit 136 comprise a coating and/or layer of Environment Barrier Coating. The sleeve member 132 may be predominately manufactured from silicon carbide and comprise a coating and/or layer of Environment Barrier Coating. The fuel compact unit 136 may be predominately manufactured from silicon carbide and comprise a coating and/or layer of Environment Barrier Coating (EBC).

The Environment Barrier Coating for Silicon Carbide is configured for high temperature environments. The Environment Barrier Coating may comprise a two layer coat comprising a mullite bond coat (3Al2O₃ 2SiO2) and a top protective coat made up of Yttrium oxides, Aluminium oxides and/or Silicon oxides (Y₂O₃-Al₂O₃-SiO₂) (sometimes referred to as a YAS coating). Such coatings are durable and corrosion resistant. Additionally, the constituents provide a relatively low neutron cross section comparable to the base silicon carbide on a volume basis.

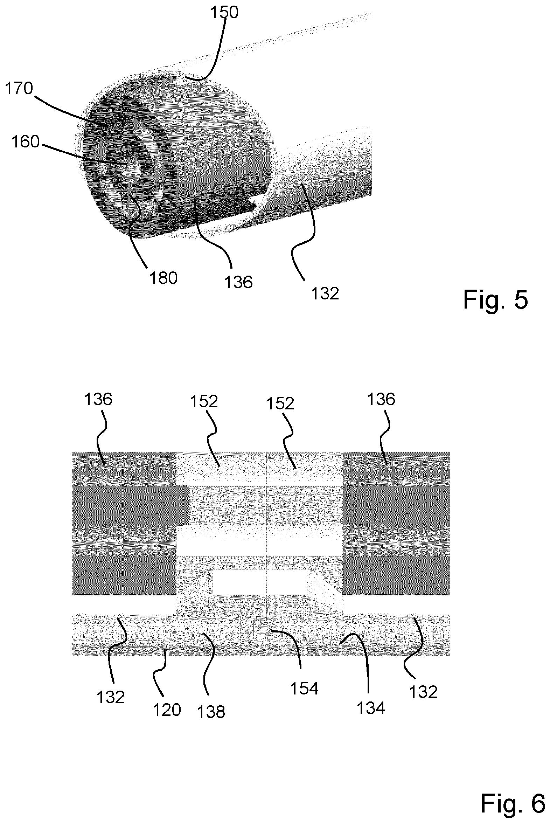

As shown in figures 4, 5, a first spacer element 150 may extend between the fuel compact unit 136 and the sleeve member 132 to locate the fuel compact unit 136 within the sleeve member 132 and maintain the clearance gap 137 therebetween to define the radiation shield flow passage 140. There may be provided a plurality of first spacer elements 150 spaced apart around the circumference of the fuel compact unit 136. The or each first spacer element 150 may be provided as a fin, array of pin features or a helical rib configured to enhance heat transfer to the working fluid flow the radiation shield flow passage 140.

As shown in figure 3, a second spacer element 158 may extend between the sleeve member 132 and the pressure tube 120 to locate the sleeve member 132 within the pressure tube 120 to thereby maintain the insulation gap 138 therebetween. There may be provided a plurality of second spacer elements 158 spaced apart around the circumference of the sleeve member 132.

An end plug 152 may be provided at an end of the fuel compact unit 136 and sleeve member 132, and the second spacer element 158 may extend from the end plug 152 to the pressure tube 120 to locate the sleeve member 132 within the pressure tube 120 to thereby maintain the insulation gap 138 therebetween.

An end plug 152 may be provided at both ends of the fuel assembly 100.

Hence in examples in which a plurality of fuel compacts 136 are provided in series, the fuel compacts 136 may be held together using the sleeve member 132 with the end plugs 152 providing retaining features at either end of the assembly.

The fuel compact unit 136 defines a first flow passage 160 running from a flow inlet 162 provided at a first end 164 of the fuel assembly 100 to a flow outlet 166 provided at a second end 168 of the fuel assembly 100. The first flow passage 160 may be centred on the longitudinal axis 112. During operation, working fluid 800 passes along the first flow passage 160.

The fuel compact unit 136 may define a second flow passage 170 running from the flow inlet 162 to the flow outlet 166 of the fuel compact unit 136, the second flow passage 170 being provided radially outwards of the first flow passage 160. During operation, working fluid 800 passes along the second flow passage 170.

The fuel compact unit 136 may define a plurality of second flow passages 170 running from the flow inlet 162 to the flow outlet 166 of the fuel compact unit 136, each of the plurality of second flow passages 170 being provided radially outwards of the first flow passage 160. Fin elements 172 are provided between each of the second flow passages 170 to thereby divide the flow and support the outer part of the fuel compact 136 on the inner part of the fuel compact 136.

The fuel assembly flow inlet 162 is operable to be in fluid communication with a working fluid source 806, and the fuel assembly flow outlet 166 is operable to be in fluid communication with a working fluid exhaust 840.

That is to say, the fuel assembly flow inlet 162 is operable to be in fluid communication with, and receive working fluid 800 from, the compressor-to-heat-source duct 702, and the fuel assembly flow outlet 166 is operable to be in fluid communication with, and exhaust working fluid 800 to, the heat-source-to-turbine duct 704.

Put another way, the fuel assembly 100 defines a part of the working fluid flow circuit 700.

The fuel compact unit 136 may be integrally formed. That is to say the outer part of the fuel compact 136 and the inner part of the fuel compact 136 may be made of a single silicon carbide structure. In an alternative example the outer part of the fuel compact 136 and the inner part of the fuel compact 136 may be formed separately (e.g. the fuel compact 136 may be an assembly of two separate elements).

As shown in figure 2, the fuel assembly 100 may comprise multiple fuel compacts 136 arranged end to end along the longitudinal axis 112 inside the sleeve member 132. In such an arrangement, a lug 180 (as shown in figure 5) may be provided on an end face of the fuel compact unit 136 for engagement with a recess in an end face of the adjacent fuel compact unit 136 to thereby prevent the adjacent fuel compact units 136 from rotating relative to one another around the longitudinal axis 112.

In some examples, several fuel assemblies 100 may be joined end to end. As shown in figure 6, the end plugs 152 may be configured to stack together to align the flow channels to prevent gas from flowing through the insulation gap 138 (i.e. annular space 138) between the fuel assembly and the pressure tube 120 to ensure it remains a "dead" (i.e. stagnant) volume and there by act as an insulator. The joint may not be gas tight, but may be provided as a tortuous path so that the pressure loss is high for any gas flowing into the insulation gap 138.

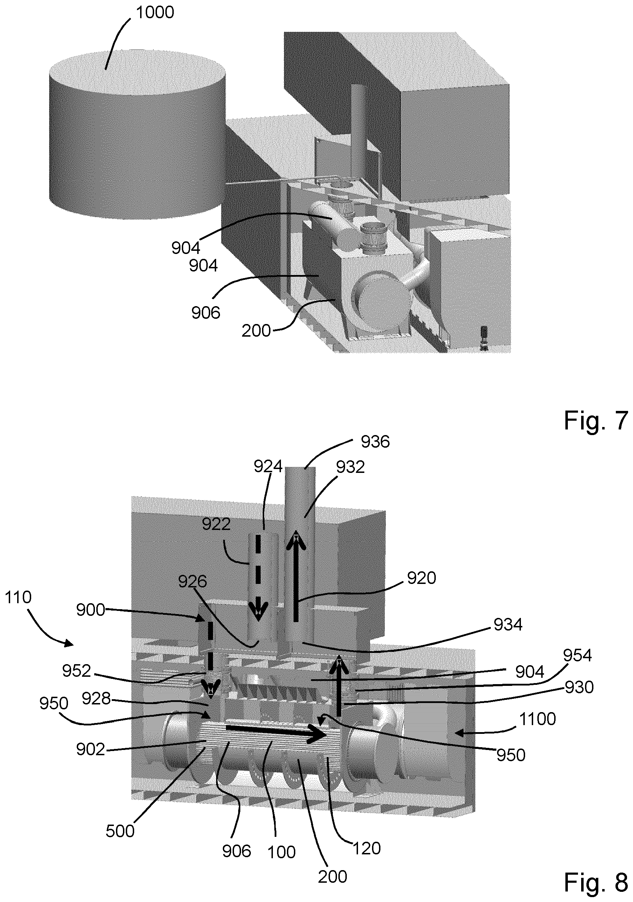

As shown in figures 7 to 10, the cooling system 900 may comprise a first coolant reservoir 902 for containment of a first coolant 908. The first coolant 908 may comprise water, for example de-mineralised water.

It will be appreciated that in figure 7 to 10, parts of equipment (e.g. housings, components and other structure) have been removed in order to illustrate the internal features of the cooling system 800 which are material to its configuration and operability. The cooling system 900 may form part of the nuclear reactor unit 200 shown in figure 1.

The cooling system 900 may comprise a condenser 904.

The cooling system 900 may comprise a first coolant system 906. The first coolant system 906 may comprise the first coolant reservoir 902 and/or the condenser 904. The first coolant system 906 may be defined by the first coolant reservoir 902 and/or the condenser 904.

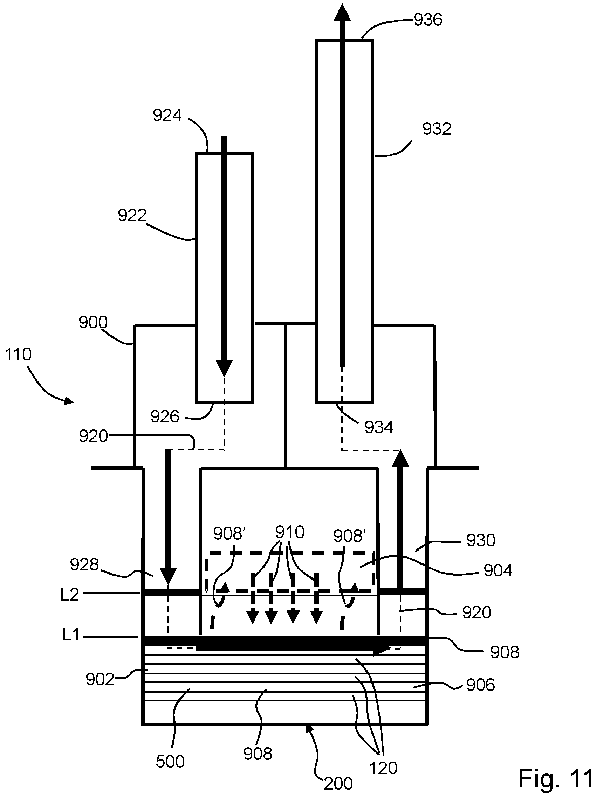

The first coolant system 906 may be configured to deliver first coolant 908 evaporated (indicated as 908' in figure 11) from the first coolant reservoir 902 by heat from the heat source 500 to the condenser 904. The first coolant system 906 may be configured to deliver condensate 910 formed by the condenser 904 back to the first coolant reservoir 902.

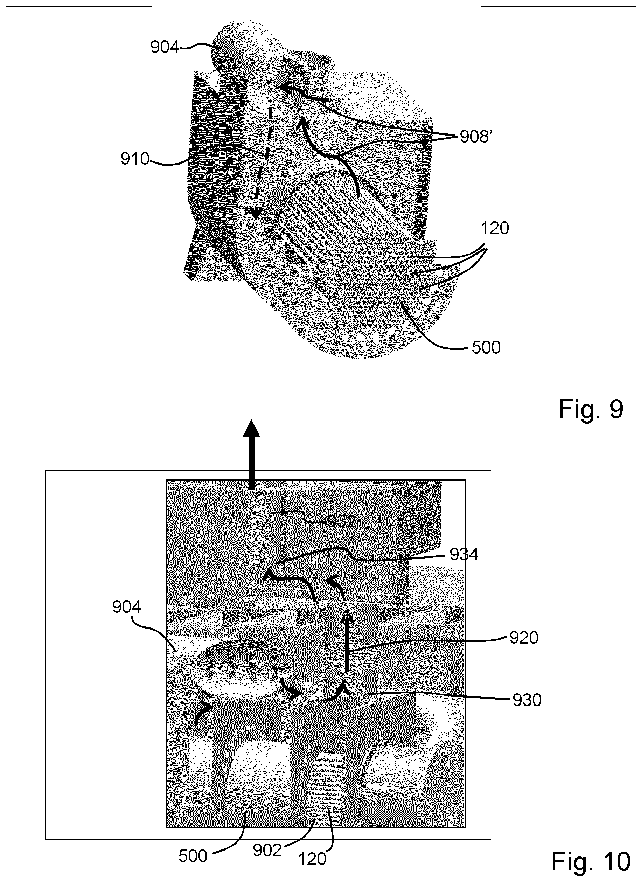

As best illustrated in figures 9, 11, the first coolant system 906 may define a flow route (e.g. a flow communication means) to deliver evaporated first coolant 908 (indicated as 908' in figures 9, 11) from the first coolant reservoir 902 to the condenser 904. The first coolant system 906 may define a flow route (e.g. a flow communication means) to deliver condensate 910 formed by the condenser 904 back to the first coolant reservoir 902.

The cooling system 900 may comprise a second coolant flow path 920 comprising a second coolant flow intake duct 922 which extends from a second-coolant-flow-intake-duct-inlet 924 to a second-coolant-flow-intake-duct-outlet 926. The second coolant may comprise air. The second coolant may be drawn from the local environment.

The first coolant reservoir 902 may define a part of the second coolant flow path 920 between a first-coolant-reservoir-second-coolant-inlet 928 and a first-coolant-reservoir-second-coolant-outlet 930. The second-coolant-flow-intake-duct-outlet 926 may be in fluid communication with the first-coolant-reservoir-second-coolant-inlet 928.

The cooling system 900 may comprise a second coolant flow exhaust duct 932 which extends from a second-coolant-flow-exhaust-duct-inlet 934 to a second-coolant-flow-exhaust-duct-outlet 936, the first-coolant-reservoir-second-coolant-outlet 930 being in fluid communication with the second-coolant-flow-exhaust-duct-inlet 934. The second-coolant-flow-exhaust-duct-outlet 936 is operable to exhaust hot air. That is to say, in use, hot air is exhausted through the second-coolant-flow-exhaust-duct-outlet 936.

The second coolant flow intake duct 922, the first coolant reservoir 902 and the second coolant flow exhaust duct 932 may be provided in series to define the second coolant flow path 920. That is to say, the second coolant flow path 920 may be defined by, in series, the second coolant flow intake duct 922, the first coolant reservoir 902 and the second coolant flow exhaust duct 932.

The second-coolant-flow-intake-duct-inlet 924, the second-coolant-flow-intake-duct-outlet 926, the first-coolant-reservoir-second-coolant-inlet 928, the first-coolant-reservoir-second-coolant-outlet 930, the second-coolant-flow-exhaust-duct-inlet 934 and the second-coolant-flow-exhaust-duct-outlet 936 may be provided in series to define the second coolant flow path 920. That is to say, the second coolant flow path 920 may be defined by, in series, the second-coolant-flow-intake-duct-inlet 924, the second-coolant-flow-intake-duct-outlet 926, the first-coolant-reservoir-second-coolant-inlet 928, the first-coolant-reservoir-second-coolant-outlet 930, the second-coolant-flow-exhaust-duct-inlet 934 and the second-coolant-flow-exhaust-duct-outlet 936.

The second coolant flow path 920 may be closed by the first coolant 908 in the first coolant reservoir 902 when first coolant 908 is above a predetermined level (L1) in the first coolant reservoir 902, as illustrated in figure 11.

As illustrated in figures 8, 11, the first-coolant-reservoir-second-coolant-inlet 928 and the first-coolant-reservoir-second-coolant-outlet 930 may be located on and/or defined by an upper side 950 of the first coolant reservoir 902. The first-coolant-reservoir-second-coolant-inlet 928 may be defined by a first duct/housing 952 which extends from the upper side of the first coolant reservoir 902. The first-coolant-reservoir-second-coolant-outlet 930 may be defined by a second duct/housing 954 which extends from the upper side 950 of the first coolant reservoir 902.

The predetermined level (L1) of the first coolant 908 may be the level at which the first coolant 908 substantially fills the first coolant reservoir 902 and thus reaches the first-coolant-reservoir-second-coolant-inlet 928 and/or the first-coolant-reservoir-second-coolant-outlet 930. The predetermined level (L1) of the first coolant 908 may be the level at which the first coolant 908 rises within the duct/housing 952, 954 which defines the first-coolant-reservoir-second-coolant-inlet 928 and/or the first-coolant-reservoir-second-coolant-outlet 930, and thereby blocks the first-coolant-reservoir-second-coolant-inlet 928 and/or the first-coolant-reservoir-second-coolant-outlet 930.

As illustrated in figures 8, 11, the second coolant flow intake duct 922 and/or the second coolant flow exhaust duct 932 may extend upwards away from the first coolant reservoir 902.

The second coolant flow intake duct 922 may extend upwards away from the first duct/housing 952 which defines the first-coolant-reservoir-second-coolant-inlet 928.

The second coolant flow exhaust duct 932 may extend upwards away from the second duct/housing 954 which defines the first-coolant-reservoir-second-coolant-outlet 930.

That is to say, the system is configured such that when first coolant 908 is above the predetermined level (L1) in the first coolant reservoir 902 the second coolant flow path 920 is blocked by the presence of the first coolant 908. The second coolant flow path 920 may be blocked at or between the first-coolant-reservoir-second-coolant-inlet 928 and first-coolant-reservoir-second-coolant-outlet 930 by the first coolant 908.

That is to say, when the first coolant 908 is above the predetermined level (L1) the first-coolant-reservoir-second-coolant-inlet 928 may be filled by the first coolant 908, thereby preventing the flow of the second coolant through the first-coolant-reservoir-second-coolant-inlet 928, and thereby preventing flow of the second coolant through the first coolant reservoir 902. When the first coolant 908 is above the predetermined level (L1) the first-coolant-reservoir-second-coolant-outlet 930 may be filled by the first coolant 908, thereby preventing the flow of the second coolant through the first-coolant-reservoir-second-coolant-outlet 930, and thereby preventing flow of the second coolant through the first coolant reservoir 902.

That is to say, when the first coolant 908 is above the predetermined level (L1) the first coolant 908 may extend across the first-coolant-reservoir-second-coolant-inlet 928, thereby preventing the flow of the second coolant through the first-coolant-reservoir-second-coolant-inlet 928, and thereby preventing flow of the second coolant through the first coolant reservoir 902. When the first coolant 908 is above the predetermined level (L1) the first coolant 908 may extend across the first-coolant-reservoir-second-coolant-outlet 930, thereby preventing the flow of the second coolant through the first-coolant-reservoir-second-coolant-outlet 930, and thereby preventing flow of the second coolant through the first coolant reservoir 902.

The second coolant flow path 920 may be open to enable second coolant flow from the second-coolant-flow-intake-duct-inlet 924 to the second-coolant-flow-exhaust-duct-outlet 936 when the first coolant 908 is below the predetermined level (L1) in the first coolant reservoir 902. That is to say, the system is configured such that when first coolant 908 is below the predetermined level (L1) in the first coolant reservoir 902 the second coolant flow path 920 is clear (i.e. unblocked). Put another way, the system is configured such that when first coolant 908 is below the predetermined level (L1) in the first coolant reservoir 902, the first coolant 908 no longer fills the first coolant reservoir 902 and so a pathway (e.g. a section of the second coolant flow path 920) is opened up to allow the flow of second coolant through the first coolant reservoir 902. The system is configured such that when the first coolant 908 is below the predetermined level (L1) in the first coolant reservoir 902, the first coolant 908 level is below the first-coolant-reservoir-second-coolant-inlet 928 in the first coolant reservoir 902 and the first coolant 908 is below the level of the first-coolant-reservoir-second-coolant-outlet 930 in the first coolant reservoir 902 such that the second coolant is free to flow through at least part of the first coolant reservoir 902 between the first-coolant-reservoir-second-coolant-inlet 928 and the first-coolant-reservoir-second-coolant-outlet 930.

Hence as the level of first coolant 908 in the first coolant reservoir 902 drops in the first coolant reservoir 902, then the second coolant path 920 in the first reservoir increases in volume. When the first coolant reservoir 902 is empty of first coolant 908, then the entire volume of the first coolant reservoir 902 defines the second coolant flaw path 420 through the first coolant reservoir 902.

The system is configured such that with the second coolant flow path 920 clear/open, the second coolant is drawn into the second coolant flow intake duct 922 by action of heated second coolant being exhausted from the second coolant flow exhaust duct 932 (as illustrated in figures 1, 8).

In normal use (that is, when first coolant 908 is above the predetermined level L1 in the first coolant reservoir 902, for example indicated by "L2" in figure 11) the second coolant flow intake duct 922 and the second-coolant-flow-exhaust-duct-outlet 936 are operable to act as flues for water vapour from the first coolant reservoir 902.

As shown in figure 7, the first coolant reservoir 902 may be in fluid communication with a first coolant fluid source 1000, for example a large water tank store nearby.

The heat source 500 may define at least part of the second coolant flow path 920 which extends between the first-coolant-reservoir-second-coolant-inlet 928 and a first-coolant-reservoir-second-coolant-outlet 930.

As set out previously, the nuclear fission reactor system 110 may comprise a nuclear reactor unit 200 provided with the fuel assembly 100 for receiving a working fluid 800. Hence in this example the fuel assembly 100 defines the heat source 500. The pressure tube 120 of the fuel assembly 100 may extend through the first coolant reservoir 902 to define at least part of the second coolant flow path 920.

The working fluid 800 may be fluidly isolated from the first coolant 908 and the second coolant 940.

The pressure tube 120 may define at least part of the second coolant flow path 920 which extends between the first-coolant-reservoir-second-coolant-inlet 928 and a first-coolant-reservoir-second-coolant-outlet 930.

The nuclear reactor unit 200 may comprise a plurality of fuel assemblies 100 for receiving a flow of working fluid 800. The plurality of fuel assemblies 100 may define the heat source 500. The plurality of pressure tubes 120 of the fuel assemblies 100 may extend through the coolant reservoir 902 of the cooling system 900. The plurality of pressure tubes 120 may be termed a "pressure tube bundle".

The plurality of pressure tubes 120 may define at least part of the second coolant flow path 920 which extends between the first-coolant-reservoir-second-coolant-inlet 928 and a first-coolant-reservoir-second-coolant-outlet 930.

As shown in figure 9, a clearance may be maintained between adjacent pressure tubes 120, wherein the clearances define at least part of the second coolant flow path 920 which extends between the first-coolant-reservoir-second-coolant-inlet 928 and a first-coolant-reservoir-second-coolant-outlet 930.

The pressure tubes 120 may be spaced apart from one another to define the clearance therebetween.

In operation of the heat engine system 300 of the present disclosure, the working fluid 800 comprises nitrogen and water vapour such that the working fluid 800 is humidified. That is to say, the relative humidity of the working fluid 800 may be 100%. The working fluid 800 is delivered to the compressor inlet 404 at a predetermined range of pressure and temperature values to achieve desired efficiency of the heat engine.

The pressure of the working fluid 800 at compressor inlet 404 may be controlled to be in the range of 0 to 10 bar absolute. The pressure of the working fluid 800 at compressor inlet 404 may be controlled to be in the range of 0 to 5 bar absolute. The pressure of the working fluid 800 at compressor inlet 404 may be controlled to be in the range of 1 to 5 bar absolute. The pressure of the working fluid 800 at compressor inlet 404 may be controlled to be about 1 bar absolute (i.e. atmospheric pressure).

The temperature of the working fluid 800 at compressor inlet 404 may be controlled to be in the range of 0 deg C to 60 deg C. The temperature of the working fluid 800 at compressor inlet 404 may be controlled to be in the range of 0 deg C to 40 deg C. The temperature of the working fluid 800 at compressor inlet 404 may be controlled to be in the range of 5 deg C to 40 deg C. The temperature of the working fluid 800 at compressor inlet 404 may be controlled to be about 15 deg C.

The evaporation of the wet compression fluid added into the working fluid 800 causes a cooling effect which lowers the working fluid temperature at compressor outlet, thereby reducing the compressor work. The result is more power is available on the turbine and greater ability to recover heat from the recuperator improving cycle efficiency and power density.

In operation of the cooling system 900 when the first coolant 908 is above the predetermined level L1 in the first coolant reservoir 902 the second coolant flow path 920 is closed by first coolant 908 in the first coolant reservoir 902, as shown in figure 11.

When the first coolant 908 is below the predetermined level L1 in the first coolant reservoir 902, the second coolant flow path 920 is open to enable second coolant flow from the second coolant flow intake duct 922 to the second coolant flow exhaust duct 932.

Hence in operation, in an example in which the cooling system 900 is used as part of a nuclear fission reactor system 110, a moderator tank which houses the pressure tubes 120 (e.g. the first coolant reservoir 902) the heat removal route for decay heat where heat is transferred to the working fluid 800 within the moderator tank is by conduction and thermal radiation. Essentially the pressure tubes 120 of the moderator tank act as heat transfer tubes for rejecting reactor decay heat.

During normal operation (i.e. when the first coolant 908 is above the predetermined level L1, for example at level L2, in the first coolant reservoir 902 so that the second coolant flow path 920 is closed by first coolant 908 in the first coolant reservoir 902) the fuel at inlet is maintained cool by the incoming coolant which minimises the total amount of heat being rejected the moderator tank. When the coolant flow stops and is depressurised (either due to fault or normal shutdown) the fuel temperatures normalise such that they become approximately isothermal between core entry and exit and in doing so increase the amount of heat which can be rejected to the moderator for a given fuel temperature. This heat is normally rejected (along with heat from gamma and neutron radiation heating of the moderator and tank structures) via moderator boiling which is then condensed on the reactor moderator condenser 904.

In the event of a loss of cooling flow through the condenser 904, the reactor 110 is shut down and the generated steam within the moderator tank (first coolant reservoir 902) is then exhausted into the second coolant flow exhaust duct 932 where it is lost to the environment. As this process continues, the water level drops in the first coolant reservoir 902 (e.g. from level L2), which may act as an initial reserve of cooling water.

The coolant level may continue to fall in the first coolant reservoir 902 until the second coolant flow path 920 is created between (and including) the inlet and outlet air ducts (i.e. the second coolant flow intake duct 922 and the second coolant flow exhaust duct 932) to continue decay heat removal indefinitely via natural convection (e.g. when the first coolant level drops below level L1 as shown in figure 11).

Due to the lower heat transfer properties of air compared to boiling of water, the pressure tube 120 temperatures may rise to approximately 300 deg C when the first coolant level has dropped to open up the second coolant flow path 920 and/or is lost entirely. From this point onwards the pressure tubes 120 are cooled continually and indefinitely to the atmosphere, while the evolution to this final cooling stage requires no pressurisation/depressurisation of any system and or component.

In one example, not shown, the addition of flap valves which shut under buoyancy open under gravity as the water level drops can be included to isolate the moderator water from the environment during normal operation.

Additional supplies of water may be maintained close by (e.g. the first coolant fluid source 1000) principally for maintaining cooling pond levels and moderator make-up of losses during normal operation which can be simply directed into the moderator tank.

Hence there is provided heat engine system and/or the components and/or sub-systems of the heat engine system which, in use, result in increased safety and efficiency of the heat engine system.

The fuel assembly 100 is configured to enable the nuclear fission reactor system 110 to operate at conditions to support the wet compression operability of the heat engine system 300. Put another way, the fuel assembly 100 of the present disclosure is configured to enable the compressor 400 of the heat engine to operate under a wet compression closed cycle.

In examples of the present disclosure, the use of a water moderator/coolant (which, for example, may be unpressurised) enables the structure of the reactor unit 200 to operate at low temperatures with low cost aluminium construction while the thermal radiation reflective properties of aluminium coupled with the fuel compact unit 136 of the present disclosure enable high reactor outlet gas temperatures permitting high plant efficiency.

Additionally the materials of construction (e.g. aluminium and silicon carbide) are tolerant to oxidising environments allowing the potential for wet compression systems where the working fluid contains a significant percentage of water vapour which within High Temperature Gas cooled reactors plants of the related art (which, for example, may contain graphite structures) would be rapidly oxidised.

The fuel compact unit 136 may be operating at a temperature of about 1300°C. The pressure tube 120 is kept at a cool temperature well below its melting point by the coolant/moderator fluid which surrounds it, actively cooling the tube 120 to a temperature close to the moderator/coolant temperature (100degC) Aluminium is ideally suited to this, as it has a constant low thermal emissivity, and is highly resistant to oxidation even at high temperature. First coolant 908 around the outside of the pressure tube 120 maintains the aluminium at below its melting point.

Additionally, the choice of materials of the fuel assembly 100 of the present disclosure also enables the use of water (for example demineralised water) as the first coolant 908, which is readily available.

Aluminium and/or aluminium alloys are inherently less prone to corrosion than other materials conventionally used in this application, as well as being highly tolerant of radiation. Additionally since in these applications the pressure tubes, operating at a temperature which is close to the melting point (i.e. annealing point) of aluminium, meaning that at these operating conditions aluminium or aluminium alloy has a high tolerance to radiation damage (for example higher temperature steel), such that the pressure tubes of the present disclosure operated at these lower temperature will inherently have a longer life than those of the related art. Additionally aluminium is highly thermally conductive and hence aids with temperature management of the nuclear fission reactor system 110. Another consideration is that aluminium alloys are also relatively low cost compared to more exotic materials that may be used in the construction of pressure tubes for a nuclear fission reactor system 110.

Silicon carbide is also inherently less prone to corrosion than other materials conventionally used for core and fuel construction materials and the sleeve member 132. Thus use of silicon carbide matrix part of the fuel assembly enables wet compression.

Operating the heat engine to operate a wet compression process gives thermal efficiency (for example 45% - 50% thermal efficiency) and improved power density (for example 1.5-2 times power increase) compared to examples of the related art where wet compression is not used. Conventional heat engine systems including a nuclear fission reactor system are not run using wet compression because of problems related to corrosion of the core structural materials and the high temperature operation required for gas turbine technologies.

The cooling system 900 of the present disclosure is configured to improve the safety of a nuclear fission reactor system 110, with used in combination with, or independently of, the fuel assembly and closed cycle heat engine wet compression configuration of the present disclosure.

A primary advantage of the cooling system 900 of the present disclosure is its configuration which enables its cooling capability under normal operation conditions as well as an immediate transition to its cooling capability in the event of the loss of operability of the condenser 904 and/or loss of coolant. The structure of the cooling system 900 is such that the transition occurs without the requirement of any physical configuration of the cooling system, for example no valves, switches or additional equipment to be operated and/or deployed.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A fuel assembly for a nuclear fission reactor system, the fuel assembly extending along a longitudinal axis; the fuel assembly comprising:
a pressure tube comprising an aluminium or aluminium alloy;
a sleeve member provided radially inward of a radially inner surface of the pressure tube; and
a fuel compact unit;
the fuel compact unit being located within the sleeve member such that a clearance gap is maintained between a radially inner surface of the sleeve member and the fuel compact unit to define a sleeve member flow passage.

2. A fuel assembly as claimed in claim 1 wherein the sleeve member and/or fuel compact unit comprise silicon carbide.

3. A fuel assembly as claimed in claim 1 or claim 2 wherein the sleeve member and/or fuel compact unit comprise a coating or layer of Environment Barrier Coating.

4. A fuel assembly as claimed in any one of claims 1 to 3 wherein a first spacer element extends between the fuel compact unit and the sleeve member to locate the fuel compact unit within the sleeve member and maintain the clearance gap therebetween.

5. A fuel assembly as claimed in claim 4 wherein an end plug is provided at an end of the fuel compact unit and the sleeve member, and a second spacer element extends from the end plug to the pressure tube to locate the sleeve member within the pressure tube and to maintain an insulation gap between the pressure tube and the sleeve member.

6. A fuel assembly as claimed in any one of the preceding claims wherein the fuel compact unit defines a first flow passage running from a flow inlet provided at a first end of the fuel assembly to a flow outlet provided at a second end of the fuel assembly.

7. A fuel assembly as claimed in claim 6 wherein the fuel assembly is centred on the longitudinal axis; and the first flow passage is centred on the longitudinal axis.

8. A fuel assembly as claimed in claim 6 or claim 7 wherein the fuel compact unit defines a second flow passage running from the flow inlet to the flow outlet of the fuel compact unit, the second flow passage being provided radially outwards of the first flow passage.

9. A fuel assembly as claimed in claim 8 wherein the fuel compact unit defines a plurality of second flow passages running from the flow inlet to the flow outlet of the fuel compact unit, each of the plurality of second flow passages being provided radially outwards of the first flow passage, fin elements being provided between each of the second flow passages.

10. A fuel assembly as claimed in claim 9 wherein the fuel compact unit is integrally formed.

11. A nuclear fission reactor system comprising a nuclear reactor unit comprising a fuel assembly as claimed in any one of claims 1 to 10; wherein the fuel assembly flow inlet is operable to be in fluid communication with a working fluid source, and the fuel assembly flow outlet is operable to be in fluid communication with a working fluid exhaust.

12. A heat engine system comprising:
a compressor defining a compressor fluid flow path extending from a compressor inlet to a compressor outlet;
a heat source provided as the nuclear fission reactor system as claimed in claim 11; and
a turbine system defining a turbine fluid flow path extending from a turbine inlet to a turbine outlet;
wherein the compressor, the heat source and the turbine system define part of a working fluid flow circuit;
wherein the working fluid flow circuit further comprises:
a compressor-to-heat-source duct which extends between the compressor outlet and the heat source inlet;
a heat-source-to-turbine duct which extends between the heat source outlet and the turbine inlet; and
a turbine-to-compressor duct which extends between the turbine outlet and the compressor inlet.

13. A heat engine system as claimed in claim 12 further comprising a wet compression fluid source in fluid communication with the compressor fluid flow path.

14. A heat engine system as claimed in any one of claims 12 or 13 further comprising:
a recuperator; and
a heat exchanger;
the compressor-to-heat-source duct providing fluid communication between the compressor outlet and the heat source inlet via the recuperator;
the turbine-to-compressor duct providing fluid communication between the turbine outlet and the compressor inlet via the recuperator and the heat exchanger.

15. A method of operation of a heat engine system as claimed in any one of claims 12 to 14 wherein the working fluid comprises nitrogen and water vapour;
and the working fluid is delivered to the compressor inlet at a predetermined range of pressure and temperature values;
the pressure values being in the range of 0 to 10 bar absolute;
the temperature being in the range of 0 deg C to 60 deg C.
